# DEMANDE DE BREVET EUROPEEN

(11) **EP 4 224 868 A2**
(43) Date de publication de la demande: **09.08.2023**
(21) Numéro de dépôt: 23166037.4
(22) Date de dépôt: 26.09.2014
(51) Int. Cl.: H04N 21/434, H04N 21/8545, H04N 21/462, H04N 21/436, H04N 21/41

(54) **PROCÉDÉS DE SYNCHRONISATION, DE GÉNÉRATION D'UN FLUX, PROGRAMMES D ORDINATEUR, MEDIA DE STOCKAGE, DISPOSITIFS DE RESTITUTION, D EXÉCUTION ET DE GÉNÉRATION CORRESPONDANTS**

(30) Priorité: 26.09.2013 FR 1359311
(62) Demande divisionnaire de: 14796206.2
(71) Demandeur: Orange, 92130 Issy-les-Moulineaux (FR)
(72) Inventeur: AGRO, Roberto, 92340 BOURG LA REINE (FR); BENDIABDALLAH, Halim, 92420 VAUCRESSON (FR)
(74) Mandataire: Vidon Brevets & Stratégie

(57) **Abrégé**

Il est proposé un procédé de synchronisation entre une restitution d'un flux multimédia par un dispositif de restitution et une exécution d'une opération par une application logicielle par au moins un dispositif d'exécution.

Le procédé comprend les étapes suivantes, dans le dispositif de restitution :
- réception du flux multimédia comprenant des données additionnelles synchronisées avec un élément multimédia,
- détection, dans le flux multimédia, d'une information de destination indiquant que les données additionnelles sont destinées à un dispositif d'exécution distinct,
- extraction des données additionnelles,
- transmission des données additionnelles au dispositif d'exécution, déclenchant une exécution, par une application logicielle, d'une opération de traitement des données additionnelles transmises,
- restitution de l'élément multimédia.

## Description

### 1. DOMAINE DE L'INVENTION

Le domaine de l'invention est celui de la télévision numérique (DTV, pour « Digital TeleVision » en anglais).

Dans un système de télévision numérique, un flux de transport multimédia est distribué par câble, satellite, voie hertzienne terrestre ou ADSL («Asymmetric Digital Subscriber Line » en anglais). Ce flux de transport multimédia contient un ou plusieurs programmes (services) dont chacun est constitué d'images, de sons et d'autres informations (données) complémentaires. Il est diffusé vers les utilisateurs (clients finaux) qui possèdent un décodeur spécifique (aussi appelé « Set-top box ») ou une télévision connectée, ou plus généralement un terminal de restitution doté de fonctions de démultiplexage et de décodage d'un tel flux.

La présente invention s'applique notamment, mais non exclusivement, dans le cas d'un flux de transport multimédia conforme aux normes MPEG-2 TS (« Moving Picture Experts Group - 2 Transport Stream » en anglais) et DVB (« Digital Video Broadcasting » en anglais), décrit dans la norme ISO/CEI 13818-1.

Plus particulièrement, l'invention s'applique à la télévision interactive, définie par exemple dans la norme HBBTV (pour « Hybrid Broadcast Broadband TV » en anglais) qui prévoit, pour les téléviseurs connectés et les décodeurs (« Set-top box »), d'ajouter des informations à afficher sur l'écran du téléviseur pendant que l'utilisateur regarde un programme de télévision (chaîne de télévision).

### 2. ARRIÈRE-PLAN TECHNOLOGIQUE

Dans le domaine télévisuel, le nombre d'émissions faisant participer les téléspectateurs est croissant. Par exemple, lors d'une émission de Télé Réalité, le téléspectateur peut voter pour un candidat, ou lors d'une émission de jeux, le téléspectateur peut répondre à un quiz. Dans tous les cas, il s'agit pour le téléspectateur de fournir une réponse à une question qui lui est présentée pendant l'émission. La question est posée au téléspectateur au moyen d'au moins une image qui est affichée par l'écran du téléviseur. En complément, ou de manière alternative, la question peut être formulée oralement par le présentateur de l'émission et est restituée par les haut-parleurs du téléviseur.

### 2.1 HBBTV

Selon la norme HBBTV, les informations additionnelles à afficher sur l'écran du téléviseur sont disponibles directement dans le flux multimédia (informations transmises par diffusion, ou « broadcast » en anglais), ou bien délivrées via une connexion (voie de retour) entre le terminal de l'utilisateur (téléviseur connecté ou décodeur) et un serveur du diffuseur ou d'un tiers opérant en relation avec le diffuseur (informations transmises via un accès point à point, ou « broadband » en anglais). Ceci doit permettre, à terme, de couvrir tous les usages généralement offerts par les télévisions connectées : télévision de rattrapage (« catch-up TV » en anglais, vidéo à la demande (VOD, pour « Video On Demand » en anglais), publicité interactive, personnalisation, votes, jeux, réseaux sociaux, guide des programmes...

Par exemple, pendant une émission de cuisine, le téléspectateur a la possibilité de faire afficher la recette sur son terminal HBBTV, si l'info est transmise dans le flux par le diffuseur.

Un terminal HBBTV (c'est-à-dire compatible avec la norme HBBTV) possède une architecture logicielle comprenant généralement un logiciel système au-dessus duquel s'exécute un intergiciel de télévision interactive (« iTV middleware » en anglais). Au sein de l'intergiciel de télévision interactive, on distingue généralement : un module de gestion d'applications interactives (incluant un navigateur), un module de gestion des tables et un module de gestion des carrousels d'objets.

Lors du déploiement d'une application interactive donnée, associée à un programme donné (chaîne de télévision), le diffuseur transmet (au sein d'un flux multimédia) le programme donné comprenant :
- des flux élémentaires audio et/ou vidéo ;
- des tables décrivant ces flux élémentaires (notamment les tables PAT (« Program Allocation Table ») et PMT (« Program Map Table »)) ;
- des constituants (notamment un code logiciel, par exemple en HTML, sous forme de page Web) d'une application interactive donnée, transmise par exemple au sein d'un carrousel d'objets codé selon la norme DSM CC (« Digital Storage Media Command and Control » en anglais) ;
- une table AIT (Application Information Table »), identifiant toutes les applications interactives disponibles pour le programme donné (y inclus l'application interactive donnée), ainsi que la manière dont ces applications interactives sont disponibles (carrousel d'objets en l'espèce pour l'application interactive donnée).

A la réception de ce programme donné, le terminal HBBTV affiche les flux audio et vidéo (grâce aux tables les décrivant). Par ailleurs, au sein de l'intergiciel de télévision interactive : le module de gestion des tables traite la table AIT et détecte qu'un code logiciel de l'application interactive donnée a été transmis dans un carrousel d'objets ; le module de gestion des carrousels reçoit et ré-assemble les constituants de l'application interactive donnée ; et le module de gestion des applications gère l'application interactive donnée (réassemblée par le module de gestion des carrousels). Comme toute application interactive, cette dernière peut par exemple prendre l'un des états suivants : téléchargée (« loaded »), en pause (« paused »), active (« active ») ou détruite (« destroyed »).

Dans une variante du déploiement d'une application interactive donnée, le programme donné (diffusé) ne comprend pas les constituants de l'application interactive donnée, mais la table AIT précise une adresse URL où peut être obtenue l'application interactive donnée. Au sein de l'intergiciel de télévision interactive du terminal HBBTV, on a alors les actions suivantes : le module de gestion des tables traite la table AIT et obtient cette adresse URL ; le navigateur du module de gestion des applications envoie une requête à cette adresse URL, afin de recevoir l'application interactive donnée ; et le module de gestion des applications gère l'application interactive donnée.

Un inconvénient de ce fonctionnement, quel que soit le mode de déploiement, réside dans une gêne visuelle pour l'utilisateur. En effet, à chaque fois que l'utilisateur accède, sur une chaîne de télévision (programme), à une application interactive particulière associé au programme et proposant un accès à un portail web, cela conduit à l'affichage, en superposition du programme TV courant, d'une fenêtre contenant un message ou un logo indiquant à l'utilisateur qu'un accès à un portail est possible en appuyant sur une touche (touche « OK » par exemple) du boîtier de télécommande du terminal HBBTV. Par ailleurs, lorsque l'utilisateur valide l'accès à un portail, il n'est plus en mesure de suivre le programme TV courant, puisqu'il est redirigé vers les écrans du portail sur son terminal HBBTV.

### 2.1 Applications « second écran »

De nombreuses initiatives de diffuseurs et de producteurs de contenus télévisuels concernent le développement de services sur smartphones ou tablettes permettant de fournir du contenu complémentaire aux programmes télévisuels. Ces développements propriétaires sont connus sous l'expression « applications second écran » (« second screen application » selon la terminologie anglo-saxonne) et permettent de fournir des contenus complémentaires aux programmes télévisuels en fonction de leur portée (pour toutes les chaînes, pour une chaîne ou pour un programme), sur un dispositif distinct (par exemple un smartphone ou une tablette) de celui utilisé pour visualiser le programme TV (par exemple un téléviseur). Ces contenus additionnels peuvent être éditoriaux ou interactifs (quiz, sondages, prédictions, ...), synchronisés ou non avec le programme TV.

Dans la plupart des cas, une synchronisation est nécessaire entre le flux TV et les contenus affichés sur l'application second écran du deuxième dispositif et peut être mise en oeuvre selon plusieurs technologies différentes, parmi lesquelles :
- le tatouage numérique (« Watermarking » en anglais) : cette technique consiste à ajouter des informations supplémentaires à un contenu audiovisuel permettant d'insérer des « marqueurs » dans le contenu. Cette technique est souvent utilisée pour insérer un copyright. Elle est aussi utilisée pour insérer des marqueurs audio dans le flux TV, imperceptibles par l'utilisateur, pouvant être capturés par l'application second écran pour déclencher une action. Le tatouage numérique est mis en oeuvre au niveau du diffuseur ;
- l'empreinte numérique (« FingerPrinting » en anglais) : cette technique consiste à générer un fichier de signatures à partir d'un contenu audiovisuel. Ce fichier permet ensuite à un module de synchronisation audio à l'écoute d'un flux, par exemple sur le deuxième dispositif exécutant l'application second écran, de connaître la position précise dans le contenu. Par exemple, une signature audio d'un épisode d'une série permet de savoir à quelle position dans l'épisode on se trouve. Cette technique est indépendante du diffuseur et n'est pas très fiable car elle dépend du bruit ambiant et de la qualité de réception dans la pièce où le téléspectateur regarde la TV ;
- une technique dite de « Timestamps » : cette technique consiste à déclencher des événements sur l'application second écran uniquement sur une base horaire. Cette technique n'est pas très fiable et ne permet pas de gérer les décalages pouvant avoir lieu avec différents moyens de réception des flux TV (IPTV, TNT, satellite, ...).

Le principal inconvénient de ces applications second écran réside donc dans le manque de fiabilité ou de précision des techniques de synchronisation nécessaires à leur bon fonctionnement.

Un autre inconvénient de ces applications second écran réside dans le fait qu'elles sont spécifiques à chaque diffuseur, voire à chaque programme, et ne permettent aucune mutualisation de fonctionnalités techniques développées pour chacune d'elles.

### 3. EXPOSÉ DE L'INVENTION

Dans un mode de réalisation particulier, il est proposé un procédé de synchronisation entre une restitution d'un flux multimédia par un dispositif de restitution et une exécution d'une opération par une application logicielle par au moins un dispositif d'exécution, les dispositifs de restitution et d'exécution étant présents au sein d'un réseau local de communication.

Le procédé comprend les étapes suivantes, dans le dispositif de restitution :
- réception du flux multimédia, le flux multimédia comprenant des données additionnelles synchronisées avec un élément multimédia contenu dans le flux multimédia,
- détection, dans le flux multimédia, d'au moins une information de destination indiquant que les données additionnelles sont destinées à au moins un dispositif d'exécution distinct du dispositif de restitution,
- extraction de l'élément multimédia et des données additionnelles du flux multimédia,
- transmission des données additionnelles au dispositif d'exécution, la transmission déclenchant une exécution, par l'application logicielle du dispositif d'exécution, d'une opération de traitement des données additionnelles transmises,
- restitution de l'élément multimédia.

Ainsi, l'invention propose une méthode de synchronisation de l'exécution d'une opération de traitement de données additionnelles avec la restitution d'un élément multimédia contenu dans le flux multimédia, en prévoyant une retransmission de données additionnelles contenues dans le flux multimédia et reçues par un dispositif de restitution du flux multimédia, vers un dispositif distinct en charge de l'exécution de cette opération de traitement relative à ces données additionnelles, via une application logicielle par exemple préalablement téléchargée et installée sur ledit dispositif distinct d'exécution.

Le principe général de l'invention repose notamment sur la présence, dans le flux multimédia, d'un indicateur permettant de détecter que les données additionnelles sont destinées à être traitées par un autre dispositif que celui qui a reçu le flux multimédia. Une fois cet indicateur détecté, le dispositif de restitution du flux multimédia traite ce dernier pour en extraire les données additionnelles avant de les transmettre, par exemple via un module de communication, au dispositif d'exécution destinataire.

Ainsi, ces données additionnelles sont traitées par un dispositif distinct du dispositif de restitution du flux, permettant une meilleure ergonomie pour l'utilisateur, qui peut continuer à visualiser le flux multimédia sur le dispositif de restitution (par exemple un programme de télévision sur un téléviseur), tout en bénéficiant d'informations additionnelles produites par l'exécution, par ce dispositif distinct (par exemple un Smartphone ou une tablette,) de l'opération de traitement des données additionnelles (cette opération correspondant par exemple à une connexion et affichage d'une page web donnée ou à une exécution d'une application interactive relative au contenu de l'élément multimédia).

De plus, l'invention permet une synchronisation fine et précise entre la restitution d'un élément multimédia du flux multimédia et l'opération de traitement des données additionnelles. Par exemple, lorsque cette opération de traitement comprend une restitution d'informations additionnelles par le dispositif d'exécution, l'invention permet une synchronisation entre la restitution, par le dispositif d'exécution, de ces informations additionnelles et la restitution, par le dispositif de restitution, de l'élément multimédia. En effet, les données additionnelles insérées dans le flux étant synchronisées avec l'élément multimédia et reçues par un unique dispositif de restitution, le dispositif d'exécution en charge de leur traitement les reçoit et les traite donc également de manière synchrone.

Enfin, non seulement la synchronisation entre le flux multimédia et les données additionnelles est optimisée en terme de précision, mais cette synchronisation étant assurée par des données transmises dans le flux multimédia, il n'est donc pas nécessaire de prévoir des moyens supplémentaires de synchronisation, comme dans les techniques de l'art antérieur. L'invention, selon ces différents modes de réalisation, permet ainsi de ne pas mettre en oeuvre de lourds moyens de synchronisation (comme des techniques de synchronisation audio, de watermarking ou de fingerprinting), tout en assurant une synchronisation efficace.

Par exemple, le flux multimédia est un flux de type HBBTV et les données additionnelles correspondent à une application interactive de type second écran.

Ainsi, selon ce mode de réalisation, l'invention permet d'exécuter une application interactive de type second écran, sur un dispositif distinct du dispositif de restitution du flux HBBTV, l'application interactive étant insérée dans le flux HBBTV et synchronisée avec le flux HBBTV selon les moyens de synchronisation HBBTV.

Selon ce mode de réalisation, l'invention permet d'offrir à un utilisateur un service d'application interactive, de type second écran par exemple, performant en terme de précision de synchronisation, l'application interactive étant transportée ou rendue accessible au moyen de données additionnelles contenues dans le flux HBBTV reçu par le dispositif de restitution puis transmises et exploitées de manière synchrone par l'application logicielle du dispositif d'exécution.

Notamment, les opérations de restitution de l'élément multimédia par le dispositif de restitution et de traitement des données additionnelles par le dispositif d'exécution sont synchrones, puisque les données additionnelles et l'élément multimédia sont reçues de manière synchrone dans le flux multimédia, extraites de ce flux et traitées dès leur réception par le dispositif de restitution d'une part et par le dispositif d'exécution d'autre part. En particulier, puisque la transmission des données additionnelles déclenche l'opération de traitement de ces données additionnelles, la restitution de l'élément multimédia par le dispositif de restitution et le traitement de ces données additionnelles par le dispositif d'exécution peuvent être effectués en parallèle par ces deux dispositifs.

En particulier, la latence entre, d'une part, un affichage, sur le dispositif d'exécution, de données résultant du traitement des données additionnelles et, d'autre part, un affichage / une restitution, sur le dispositif de restitution, du contenu multimédia dépend, d'une part, du temps de décodage et/ou de traitement, par le dispositif de restitution, du contenu multimédia, et d'autre part, du temps de transmission des données additionnelles au dispositif d'exécution auquel s'ajoute le temps de traitement par le dispositif d'exécution, de ces données additionnelles. En pratique, cette latence reste bien inférieure à une seconde, de l'ordre quelques dizaines ou centaines de millisecondes. Les données additionnelles contenues dans le flux multimédia forment donc un « trigger » ou commande qui déclenche un traitement côté dispositif d'exécution. Ce traitement est immédiat, déclenché dès réception de ces données additionnelles par ce dispositif d'exécution.

Selon une caractéristique particulière de l'invention, l'information de destination est portée par un descripteur présent dans une table de signalisation AIT, pour Application Information Table en anglais, du flux HBBTV.

Ainsi, pour offrir à un utilisateur un service d'application de type second écran performant en terme de précision de synchronisation, l'invention prévoit, selon ce mode de réalisation, d'ajouter un descripteur dans la table AIT du flux HBBTV permettant d'indiquer si l'application identifiée par cette table AIT est destinée à un dispositif distinct du dispositif de restitution du flux HBBTV.

De cette manière, sur détection de ce descripteur, le dispositif de restitution sait qu'il doit retransmettre les données additionnelles (correspondant à une application interactive) reçues dans le flux, et identifiées par la table AIT, à un autre dispositif, lequel exécutera cette application interactive.

Selon un aspect particulier de l'invention, le procédé comprend en outre les étapes suivantes :
- détection, dans le flux multimédia, d'au moins un paquet de données associé aux données additionnelles et destiné au dispositif d'exécution,
- extraction du paquet de données du flux multimédia,
- transmission du paquet de données associé aux données additionnelles au dispositif d'exécution, la transmission déclenchant une exécution, par l'application logicielle du dispositif d'exécution, d'une opération de traitement du paquet de données.

Ainsi, selon ce mode de réalisation, des paquets de données, associés aux données additionnelles précédemment insérées dans le flux multimédia, et donc destinés également au dispositif d'exécution, peuvent être détectés dans le flux multimédia, par le dispositif de restitution, de façon à les transmettre vers le dispositif d'exécution destinataire.

Par exemple, ces paquets de données peuvent être insérés dans le flux multimédia pour mettre à jour les données additionnelles précédemment reçues, tout en bénéficiant de la synchronisation précise du flux multimédia.

Par exemple, le paquet de données associé aux données additionnelles correspond à un événement de type « Event Stream » HBBTV.

Ainsi, selon ce mode de réalisation, des événements de type « Event Stream » peuvent également être transmis par le dispositif de restitution au dispositif d'exécution, par exemple pour notifier des événements synchronisés avec le flux multimédia, lorsque les données additionnelles sont en cours de traitement sur le dispositif d'exécution.

Par exemple, lorsque les données additionnelles correspondent à une application interactive de type second écran, les « Event Stream » permettent de notifier à l'application interactive des événements au cours de l'exécution de l'application interactive. Par exemple, si l'application interactive est une application de Quiz, les « Event Stream » peuvent être utilisés pour notifier le lancement d'un quiz particulier, une fois l'application de Quiz lancée.

La réception et/ou le traitement du paquet de données associé aux données additionnelles peuvent être pris en charge par l'application logicielle ayant réceptionné et traité les données additionnelles, en vue par exemple d'une transmission de ce paquet de donnée à l'application interactive pour traitement, ou être pris en charge directement par l'application interactive.

Ici aussi, la latence entre d'une part, un affichage, sur le dispositif d'exécution, de données résultant du traitement du paquet de données et, d'autre part, un affichage / une restitution, sur le dispositif de restitution, du contenu multimédia reçu avec ce paquet de données dépend, d'une part, du temps de décodage et /ou de traitement, par le dispositif de restitution, du contenu multimédia, et d'autre part, du temps de transmission du paquet de données au dispositif d'exécution auquel s'ajoute le temps de traitement par le dispositif d'exécution, de ce paquet de données. En pratique, cette latence reste bien inférieure à une seconde, de l'ordre quelques dizaines voire centaines de millisecondes.

Le paquet de données contenu dans le flux multimédia forme donc un « trigger » ou commande qui déclenche un traitement côté dispositif d'exécution. Ce traitement est immédiat, déclenché dès réception de ce paquet de données par ce dispositif d'exécution.

Quelle que soit l'option de réalisation choisie, le procédé comprend les étapes suivantes :
- détection, dans ledit flux multimédia, d'au moins un paquet de données associé auxdites données additionnelles et destiné audit au moins un dispositif d'exécution,
- extraction dudit paquet de données dudit flux multimédia,
- transmission dudit paquet de données audit au moins un dispositif d'exécution, ladite transmission déclenchant une exécution, par ladite application interactive, d'une opération de traitement dudit paquet de données.

Selon une caractéristique particulière de l'invention, les étapes d'extraction correspondent à un démultiplexage des données additionnelles et/ou du paquet de données associé aux données additionnelles.

Ainsi, selon ce mode de réalisation, le traitement du flux multimédia reçu par le dispositif de restitution consiste à démultiplexer les données additionnelles insérées dans le flux, de manière à pouvoir les transmettre, sans les interpréter ni les exécuter, à un dispositif d'exécution distinct, en charge lui de les interpréter et les exécuter.

Par exemple, si les données additionnelles correspondent à une URL insérée dans le flux, le démultiplexage consiste à extraire cette URL, de manière à pouvoir la transmettre au dispositif d'exécution.

Dans le cas de paquet de données associé aux données additionnelles, comme un « Event Stream » HBBTV, le démultiplexage consiste à extraire l'Event Stream, de manière à le transmettre au dispositif d'exécution.

Selon un aspect particulier, le procédé comprend en outre une étape de détection, dans le flux multimédia, d'au moins un indicateur de fin d'exécution, par l'application logicielle du dispositif d'exécution, de l'opération de traitement des données additionnelles précédemment transmises au dispositif d'exécution.

Ainsi, selon ce mode de réalisation, l'invention prévoit également que l'exécution des données additionnelles par le dispositif d'exécution puisse être stoppée, via un indicateur détecté dans le flux multimédia et transmis par le dispositif de restitution au dispositif d'exécution.

Par exemple, dans la norme HBBTV, des tables spécifiques sont prévues à cette fin.

Selon une caractéristique particulière, le procédé comprend en outre une étape préliminaire d'annonce de présence du dispositif de restitution au sein du réseau local de communication.

Ainsi, selon ce mode de réalisation de l'invention, le dispositif de restitution se signale comme étant présent dans le réseau local de communication auquel il est connecté, de façon à ce que le ou les dispositifs d'exécution également présents dans ce même réseau local de communication puisse(nt) avoir connaissance de sa présence, par exemple via un processus de découverte tel que SSDP (pour « Simple Service Discovery Protocol » en anglais) utilisé pour la découvertes d'entités UPnP (pour « Universal Plug and Play » en anglais).

Selon un autre aspect de l'invention, le procédé comprend en outre les étapes suivantes, dans le dispositif d'exécution :
- découverte du dispositif de restitution annoncé lors de l'étape d'annonce de présence,
- réception des données additionnelles en provenance du dispositif de restitution,
- exécution, par l'application logicielle du dispositif d'exécution, d'une opération de traitement des données additionnelles reçues.

Ce mode de réalisation de l'invention concerne plus particulièrement le dispositif d'exécution, et les étapes mises en oeuvre dans ce dernier.

En particulier, le dispositif d'exécution commence par prendre connaissance du ou des dispositifs de restitution connectés au même réseau local que lui, de façon à pouvoir, le cas échéant, mettre en oeuvre un mécanisme de communication de données avec ce ou ces dispositifs de restitution.

En particulier, lorsqu'un dispositif de restitution a mis en oeuvre une étape d'annonce de sa présence dans le réseau local, le dispositif d'exécution peut donc le découvrir.

Une fois ce processus de découverte effectué, le dispositif d'exécution reçoit des données additionnelles, préalablement reçues et retransmises, selon les différents modes de réalisation de l'invention, par le dispositif de restitution.

Ces données additionnelles sont synchronisées, comme déjà décrit ci-dessus, avec le flux multimédia restitué sur le dispositif de restitution et sont donc interprétées et exécutées par le module adéquat dans le dispositif d'exécution. Ainsi, après les avoir reçues en provenance du dispositif de restitution, le dispositif d'exécution interprète et exécute ces données additionnelles, via une application logicielle, par exemple préalablement téléchargée et installée sur le dispositif d'exécution.

Par exemple, le dispositif d'exécution reçoit les données additionnelles en provenance du dispositif de restitution via un module de communication, celui-ci les transmettant ensuite au(x) modules d'interprétation et d'exécution des données additionnelles du dispositif d'exécution, lesquels exécutent, au moyen d'une application logicielle, une opération de traitement de ces données additionnelles.

Selon un aspect particulier, les étapes de transmission, dans le dispositif de restitution, et de réception, dans le dispositif d'exécution, sont mises en oeuvre selon un mécanisme appartenant au groupe comprenant :
- mécanisme de requêtes émises par le dispositif d'exécution vers le dispositif de restitution pour recevoir des données ;
- mécanisme de transmission de données vers le dispositif d'exécution, à l'initiative du dispositif de restitution.

Ainsi, l'invention, selon ses différents modes de réalisation, prévoit l'utilisation de plusieurs mécanismes connus de transmission des données additionnelles, ainsi que des paquets de données associés (comme des événements) du dispositif de restitution du flux multimédia au dispositif d'exécution des données additionnelles. Parmi ces mécanismes connus, des mécanismes à l'initiative du serveur ou à l'initiative du client peuvent être implémentés (« polling », « http Server Push », transmission « UDP », ....

L'invention concerne également un procédé de génération d'un flux multimédia, comprenant les étapes suivantes :
- insertion, dans le flux multimédia, de données additionnelles,
- insertion, dans le flux multimédia, d'au moins une information de destination, indiquant que les données additionnelles sont destinées à au moins un dispositif d'exécution distinct d'un dispositif de restitution du flux multimédia, et
- transmission du flux multimédia à au moins un dispositif de restitution du flux multimédia, conçu pour, suite à la détection de l'information de destination, transmettre les données additionnelles à un dispositif d'exécution destinataire.

Ainsi, un autre aspect de l'invention concerne la génération d'un flux multimédia, et dans un premier temps, l'insertion, dans ce flux multimédia, de données additionnelles.

Dans un second temps, le procédé de génération du flux multimédia insère, dans le flux multimédia, un indicateur permettant au dispositif de restitution du flux de détecter que les données additionnelles sont destinées à un dispositif d'exécution distinct du dispositif de restitution du flux.

L'invention concerne également un programme d'ordinateur, comprenant des instructions de code de programme pour la mise en oeuvre des procédés de synchronisation et de génération tels que décrits précédemment, lorsque le programme est exécuté sur un ordinateur.

L'invention concerne également un médium de stockage lisible par ordinateur, stockant un programme d'ordinateur comprenant un jeu d'instructions exécutables par un ordinateur ou un processeur pour mettre en oeuvre les procédés de synchronisation et de génération tels que décrits précédemment.

Un autre aspect de l'invention concerne un dispositif de restitution d'un flux multimédia présent au sein d'un réseau local de communication, comprenant les moyens suivants :
- un module de réception du flux multimédia, le flux multimédia comprenant des données additionnelles synchronisées avec un élément multimédia contenu dans le flux multimédia,
- un module de détection, dans le flux multimédia, d'au moins une information de destination indiquant que les données additionnelles sont destinées à au moins un dispositif d'exécution distinct du dispositif de restitution,
- un module d'extraction de l'élément multimédia et des données additionnelles du flux multimédia,
- un module de transmission des données additionnelles au dispositif d'exécution, la transmission déclenchant une exécution, par l'application logicielle du dispositif d'exécution, d'une opération de traitement des données additionnelles transmises,
- un module de restitution de l'élément multimédia.

Un tel dispositif est par exemple un téléviseur, un décodeur ou encore un ordinateur comprenant une application permettant de recevoir un flux multimédia et de mettre en oeuvre les étapes du procédé. Un tel dispositif de restitution correspond à tout dispositif capable d'interpréter et de restituer un flux multimédia, quelque soit son mode de diffusion/transmission.

Un autre aspect de l'invention concerne un dispositif d'exécution des données additionnelles présent au sein d'un réseau local de communication, comprenant les moyens suivants :
- un module de découverte d'au moins un dispositif de restitution annoncé au sein du réseau local,
- un module de réception des données additionnelles en provenance du dispositif de restitution,
- un module d'exécution, par une application logicielle du dispositif d'exécution, d'une opération de traitement des données additionnelles reçues.

Un tel dispositif est par exemple un smartphone ou une tablette.

Un autre aspect de l'invention concerne un dispositif de génération d'un flux multimédia comprenant les moyens suivants :
- des moyens d'insertion, dans le flux multimédia, de données additionnelles,
- des moyens d'insertion, dans le flux multimédia, d'au moins une information de destination, indiquant que les données additionnelles sont destinées à au moins un dispositif d'exécution distinct d'un dispositif de restitution du flux multimédia, les dispositifs étant présents au sein d'un réseau local de communication, et
- des moyens de transmission du flux multimédia à au moins un dispositif de restitution du flux multimédia, conçu pour, suite à la détection de l'information de destination, transmettre les données additionnelles à un dispositif d'exécution destinataire.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente les principales étapes du procédé de transmission de données additionnelles selon un mode de réalisation particulier de l'invention ;
- la figure 2 présente un synoptique d'un système selon un mode de réalisation particulier de l'invention ;
- la figure 3 présente un diagramme de séquences montrant de manière générique un exemple de cinématique de communication entre les deux dispositifs du système de la figure 2 ;
- les figures 4a à 4c illustrent des exemples de structure simplifiée d'un dispositif de restitution, d'un dispositif d'exécution et d'un dispositif de génération, selon un mode de réalisation de l'invention.

### 5. DESCRIPTION DÉTAILLÉE

Sur toutes les figures du présent document, les éléments et étapes identiques sont désignés par une même référence numérique.

Dans la suite de la description, on suppose à titre d'exemple non limitatif que le flux multimédia 100 est conforme aux normes MPEG-2 TS et HBBTV, et qu'il comprend des données additionnelles 110 correspondant à une application interactive, par exemple une application de type « second écran », destinée à être exécutée sur un dispositif d'exécution physiquement distinct du disposition de restitution. Cette application interactive peut être une application HBBTV ou non (une application HBBTV étant une application qui est codée en HTML (HTML-CE) et/ou Javascript et est transportée dans un flux HBBTV), une application Web ou non. L'invention est applicable cependant à différents types d'application, et n'implique pas un mode de codage particulier. Il suffit que l'application logicielle du dispositif d'exécution soit capable d'en déclencher l'exécution, éventuellement en faisant appel au système d'exploitation du dispositif d'exécution.

Les données additionnelles 110 sont synchronisées, c'est-à-dire insérées dans le flux multimédia de manière synchronisée, avec un élément multimédia 120 du flux multimédia 100 (par exemple la partie courante du flux multimédia, comme un programme donné). Ainsi la transmission des données additionnelles au dispositif d'exécution et l'affichage de l'élément multimédia vont être traités consécutivement, sans délai entre le traitement des données additionnelles et l'affichage de l'élément.

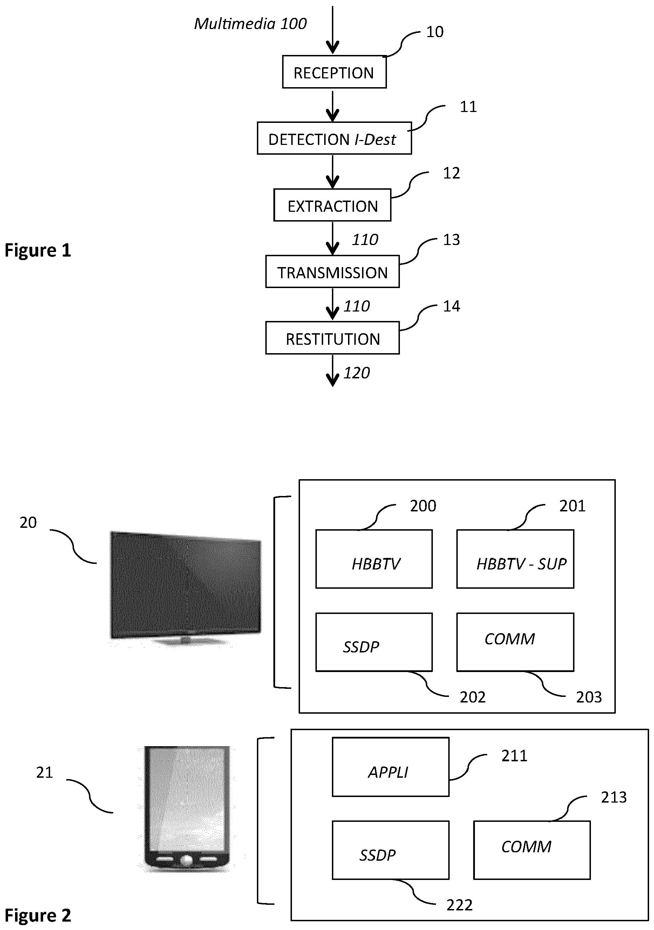

On présente maintenant, en relation avec la figure 1, les principales étapes du procédé de synchronisation selon un mode de réalisation particulier de l'invention, dans un système tel qu'illustré en figure 2.

On considère dans ce système un dispositif de restitution 20 d'un flux multimédia 100, par exemple un téléviseur HBBTV, et un dispositif d'exécution 21, par une application logicielle, d'une opération de traitement de données additionnelles 110 (contenues dans le flux multimédia 100 et synchronisées avec un élément multimédia 120 contenu dans le flux multimédia 100), par exemple un smartphone.

Par exemple, le flux multimédia HBBTV correspond à un programme télévisé de jeu, et les données additionnelles correspondent à une application interactive de Quiz, destinée à être exécutée sur un second écran, distinct de l'écran sur lequel est restitué le programme télévisé de jeu. Cette application consiste par exemple à permettre au téléspectateur de répondre aux questions du Quizz via son smartphone, tout en continuant à visualiser de manière ergonomique le programme télévisé de jeu sur son téléviseur connecté.

Les premières étapes du procédé de synchronisation sont mises en oeuvre dans le dispositif de restitution 20, lequel reçoit, lors d'une première étape de réception 10, le flux multimédia 100.

Une étape de détection 11 est ensuite mise en oeuvre, afin de détecter, dans le flux multimédia 100, une information de destination, notée I-Dest, indiquant que les données additionnelles 110 sont destinées à au moins un dispositif d'exécution distinct du dispositif de restitution 20, en l'occurrence le dispositif d'exécution 21.

Cette étape de détection 11 se base, dans cet exemple, sur le fait qu'une application interactive est identifiable dans un flux multimédia de type MPEG2 TS par une table DVB. Il s'agit de la table AIT (pour « Application Information Table » en anglais). Cette table contient en effet différentes informations permettant d'exécuter l'application interactive, et en particulier, selon ce mode de réalisation de l'invention, cette table transporte un descripteur privé, noté ici information de destination I-Dest. Cette information de destination I-Dest indique le terminal destinataire/concerné par l'application interactive. Dans l'exemple considéré, il s'agit du dispositif d'exécution 21.

Cette étape de détection 11 est mise en oeuvre, selon ce mode de réalisation, par un module HBBTV supplémentaire 201 du dispositif de restitution 20, noté HBBTV-SUP. Ainsi, le dispositif de restitution 20 comprend un module HBBTV « standard» 200, permettant de mettre en oeuvre toutes les fonctionnalités « standard » HBBTV, et un module HBBTV supplémentaire 201 pour la mise en oeuvre de l'invention, selon ses différents modes de réalisation particuliers.

L'étape suivante d'extraction 12 consiste à démultiplexer les données additionnelles 110, ainsi que l'élément multimédia 120, du flux multimédia 100, de façon à pouvoir transmettre, lors d'une étape 13 de transmission, ces données additionnelles 110 au dispositif d'exécution 21.

L'élément multimédia 120 est quant à lui restitué, sur le dispositif de restitution 20, lors d'une étape 14 de restitution.

Par exemple, cette étape d'extraction 12 est mise en oeuvre par le module HBBTV « standard» 200 du dispositif de restitution 20.

Par ailleurs, cette étape d'extraction 12 déclenche une exécution, par une application logicielle 211 du dispositif d'exécution 21, d'une opération de traitement de ces données additionnelles 110 transmises, de façon à ce que la restitution, sur le dispositif de restitution 20, de l'élément multimédia 120 et l'exécution, sur le dispositif d'exécution 21, de l'opération de traitement des données additionnelles 110 soient synchronisées.

L'application logicielle 211 du dispositif d'exécution 21 est par exemple une application téléchargée sur le dispositif d'exécution 21, en vue de pouvoir traiter des données additionnelles reçues en provenance d'un dispositif de restitution. Cette application logicielle est par exemple une application « native » (cette application peut être téléchargée sur « Google Play » ou « AppleStore », selon le système d'exploitation).

Cette application logicielle 211 est donc mise en oeuvre dans le dispositif d'exécution 21 pour le traitement des données additionnelles et doit être bien distinguée, par la suite, de l'application interactive, par exemple de type HBBTV et/ou de type second écran, correspondant aux données additionnelles 110 transmises.

Ainsi, l'exécution, par cette application logicielle 211, de cette opération de traitement des données additionnelles 110, consiste en fait, dans cet exemple, à déclencher l'exécution de l'application interactive.

Comment déjà décrit ci-dessus, il existe deux manières de déclencher l'exécution d'une application interactive à partir d'un dispositif d'exécution : soit le flux HBBTV contient une information d'accès à l'application interactive (par exemple, la table AIT contient une adresse URL où peut être téléchargée l'application interactive), soit une partie ou la totalité du ou des modules logiciels constituant l'application interactive se trouve encapsulée dans le flux HBBTV sous une forme interprétable ou exécutable par le dispositif d'exécution 21 (par exemple dans un carrousel DVB, par exemple sous la forme de méta données interprétables par l'application logicielle 211 du dispositif d'exécution 21).

Dans le cas de la première variante, l'opération de traitement des données additionnelles consiste donc à obtenir l'URL, à envoyer une requête HTTP à cette adresse URL, afin de recevoir en retour des données constituant l'application interactive en question, d'exécuter l'application interactive et d'afficher un contenu résultant de cette exécution (questions du Quizz dans l'exemple considéré). Les données chargées peuvent être soit des pages Web, réceptionnées puis affichées par l'application logicielle 211, soit une autre application (non Web) interprétable et/ou exécutable par le dispositif d'exécution 21 (par l'application logicielle 211 ou par le système d'exploitation du terminal 21).

Dans le cas de la deuxième variante, l'opération de traitement des données additionnelles consiste donc à interpréter les métadonnées constituant l'application interactive interprétable et/ou exécutable par le dispositif d'exécution 21 (par l'application logicielle 211 ou par le système d'exploitation du terminal 21), à exécuter l'application interactive par le dispositif d'exécution 21 et à afficher un contenu résultant de cette exécution (questions du Quizz dans l'exemple considéré).

Par ailleurs, l'étape de transmission 13 peut être mise en oeuvre par un module de communication 203 du dispositif de restitution 20, permettant une communication de type serveur vers le dispositif d'exécution 21, et par exemple vers un module de communication 213 du dispositif d'exécution 21.

Ainsi, le module de communication 213 du dispositif d'exécution 21 reçoit les données additionnelles 110 en provenance du module de communication 203 du dispositif de restitution 20, et les transmet par exemple aux modules de l'application logicielle 211 (par exemple des modules classiques « IHM » et « BUSINESS ») en charge de les interpréter, comme décrit ci-dessus. Dans un mode de réalisation, le module de communication 213 est intégré à l'application logicielle 211 elle-même.

On décrit à présent les différents modes de communication pouvant être mis en oeuvre entre les dispositifs de restitution et d'exécution, selon différents modes de réalisation particuliers de l'invention, permettant de notifier l'application logicielle 211 du dispositif d'exécution 21 que des nouvelles données additionnelles 110 sont détectées à partir du dispositif de restitution 20.

Plusieurs technologies de communication connues peuvent être mises en oeuvre, notamment selon deux types de mécanisme connus.

Par exemple, selon un premier type de mécanisme dit de « Polling », le module de communication 213 du dispositif d'exécution 21 envoie des requêtes périodiques au module de communication 203 du dispositif de restitution 20, pour savoir si de nouvelles données sont disponibles et, si oui, les récupère.

Selon un deuxième type de mécanisme de communication dit de « Push », différentes techniques permettent de transmettre des données du dispositif de restitution 20 (« serveur ») vers le dispositif d'exécution 21 (« client »), à l'initiative du « serveur », par exemple selon des techniques dites de « http Server Push ».

Selon une première technique, le serveur http du dispositif de restitution 20 ne ferme pas la connexion après avoir envoyé sa dernière réponse au dispositif d'exécution 21. La connexion reste donc ouverte et le serveur empile les événements jusqu'à ce que le client l'interroge à nouveau pour récupérer un nouvel événement.

Deux autres techniques basées sur le standard « HTMLS » permettent le « Push » : « Server-Sent events » et « WebSocket ». L'interface de programmation « WebSocket » permet notamment d'établir une communication bidirectionnelle (dite « full-duplex ») entre un client et un serveur.

Selon une technique dite de « Long polling », le client émet une requête vers le serveur, et si le serveur n'a pas de nouvel événement à notifier, la requête reste bloquante jusqu'à ce qu'une nouvelle notification arrive.

Selon une technique de transmission UDP (pour « User Datagram Protocol » en anglais), le serveur peut émettre des requêtes de notification via le protocole UDP. L'envoi des paquets UDP peut être réalisé en unicast (à destination exclusive du client qui aura au préalable fourni son adresse IP et le port concerné pour la réception des paquets UDP) ou en multicast (à la façon des événements UPnP). L'approche multicast permet par exemple d'informer plusieurs dispositifs d'exécution du réseau local de l'arrivée d'un nouvel événement.

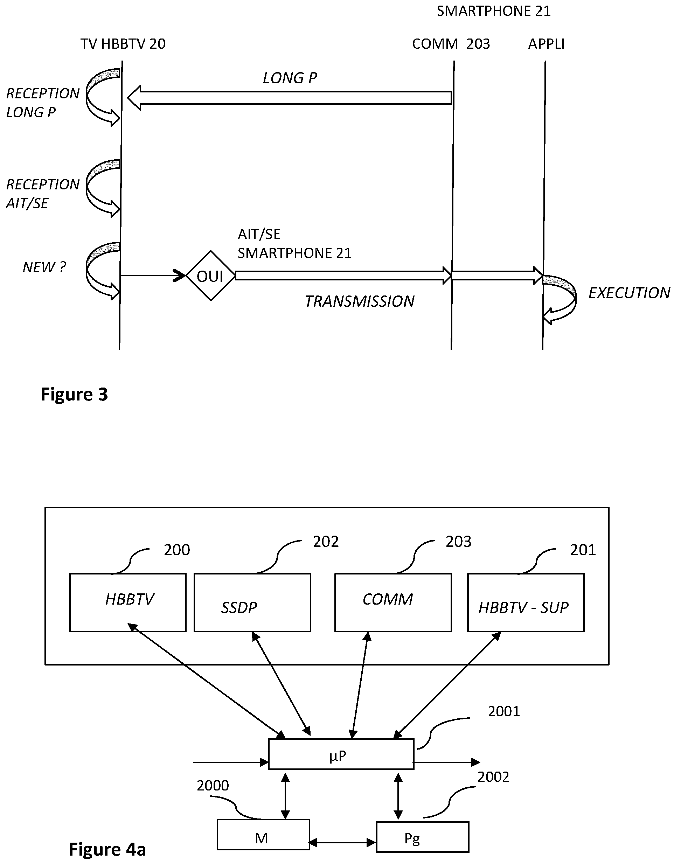

La figure 3 illustre un exemple de communication de type « Long Polling », noté LONG P, entre un dispositif de restitution 20, par exemple une TV HBBTV, et un dispositif d'exécution 21, par exemple un smartphone. Selon cet exemple, le client, c'est-à-dire le smartphone, émet une requête LONG P vers le serveur, c'est-à-dire la TV HBBTV. Tant que cette dernière ne reçoit pas de nouvel événement (par exemple un Stream Event, noté SE) ou une table AIT, aucune réponse n'est faite au smartphone, et lorsqu'un nouvel événement est reçu par la TV HBBTV, la TV HBBTV répond au smartphone, plus précisément en transmettant des données au module de communication 213 du smartphone. Ce module de communication 213 reçoit ces données et les transmet au module du smartphone en charge de leur exécution, c'est-à-dire à l'application logicielle 211.

Quelque soit la technique de communication choisie entre les deux dispositifs de restitution 20 et d'exécution 21, une étape préalable à tout échange de données consiste à permettre la mise en relation des différents dispositifs du réseau local de communication impliqués dans le mise en oeuvre de l'invention, selon ses différents modes de réalisation particuliers.

Cette étape préalable peut consister en une étape de « découverte » ou d'annonce de présence du dispositif de restitution 20 au sein du réseau local de communication.

Ainsi, selon une première variante de réalisation, le dispositif de restitution 20 se signale comme étant présent dans le réseau local de communication auquel il est connecté, de façon à ce que le dispositif d'exécution 21 également présent dans ce même réseau local de communication puisse avoir connaissance de sa présence, par exemple via un processus de découverte connu tel que SSDP d'UPnP. Par exemple, les annonces sont envoyées par le dispositif de restitution 20 de manière périodique.

Selon une deuxième variante, cette étape de découverte peut également consister en l'envoi d'une requête de recherche de dispositif(s) de restitution, par le dispositif d'exécution 21, le ou les dispositifs de restitution présents dans le réseau local de communication répondant directement à la requête de recherche.

Selon un mode de réalisation particulier différent de celui illustré en figure 2, plusieurs dispositifs de restitution peuvent être présents dans le réseau local de communication. Dans ce cas, le dispositif d'exécution aura connaissance de la présence de ces différents dispositifs de restitution et en informera l'utilisateur en lui présentant une liste de dispositifs de restitution, dans laquelle il pourra sélectionner le dispositif de restitution à utiliser, avec lequel le dispositif d'exécution devra donc communiquer.

Une fois cette étape de découverte effectuée, les dispositifs de restitution 20 et d'exécution 21 sont donc mis en relation. Il est alors possible, pour le dispositif de restitution 20, de transmettre les données additionnelles extraites du flux multimédia, au dispositif d'exécution 21, lorsqu'une information de destination adéquate est détectée dans ce flux multimédia, comme décrit ci-dessus.

Lorsque les différentes étapes décrites ci-dessus ont été mises en oeuvre selon les différents modes de réalisation particuliers de l'invention, la restitution de l'élément multimédia du flux multimédia, dans le dispositif de restitution, et l'exécution de l'opération de traitement des données additionnelles synchronisées avec cet élément multimédia, dans le dispositif d'exécution, sont synchronisées.

En effet, selon une première variante de réalisation, décrite ci-dessus, la synchronisation du traitement des données additionnelles et de la restitution du flux multimédia est rendue possible par l'utilisation de la table AIT comprenant les données additionnelles synchronisées avec le flux multimédia portant cette table AIT. En effet, cette table AIT étant reçue et traitée par un unique dispositif de restitution 20, le dispositif d'exécution 21 en charge de leur traitement les reçoit et les traite donc également de manière synchrone.

Selon une autre variante, la synchronisation des données additionnelles dans le flux HBBTV est rendue possible par le fait qu'un flux HBBTV se trouve encapsulé dans un carrousel d'objets codé selon la norme DSM CC. Cet outil associé au MPEG2 TS gère notamment la transmission d'événements de synchronisation ainsi que de données additionnelles dans le flux de transport MPEG2.

Ces événements sont classiquement appelés « Stream Event », et se composent de petits paquets de données pouvant être transmis de manière synchrone dans le signal de programme. Ils permettent donc de transmettre des données additionnelles à des instants précis comme, par exemple, des questions ou des réponses à un quiz interactif.

En l'occurrence, et selon les différents modes de réalisation particuliers de l'invention, ces paquets sont immédiatement traités après leur démultiplexage au sein du dispositif de restitution 20 et immédiatement transmis vers le dispositif d'exécution 21 destinataire. Il est donc possible de synchroniser de manière fine et précise des données additionnelles (comme par exemple une application interactive) avec le flux multimédia d'une chaine TV.

Il est à noter que plusieurs variantes sont envisageables pour l'exécution d'une application interactive, en plus de celle décrite ci-dessus qui consiste à déporter cette exécution sur un dispositif distinct de celui de restitution du flux HBBTV.

Ainsi, il est également possible que l'application interactive soit exécutée à la fois sur le dispositif de restitution du flux HBBTV et également sur le dispositif d'exécution distinct.

Dans ce cas, la table AIT comprend par exemple un descripteur indiquant que l'application interactive est destinée à être exécutée sur le dispositif d'exécution et un descripteur indiquant que l'application peut également être exécutée sur le dispositif de restitution.

Par exemple, dans le cas où l'application interactive est visuellement peu gênante pour l'utilisateur, celui-ci peut préférer ne pas utiliser son smartphone et interagir avec l'application directement sur son téléviseur connecté.

Dans ce cas, l'exécution de l'application interactive sur le téléviseur connecté peut être conditionnée par une action utilisateur, comme une validation sur un bouton spécifique de la télécommande.

On présente maintenant les principales étapes du procédé de génération d'un flux multimédia, selon un mode de réalisation particulier de l'invention.

Dans un premier temps, le procédé de génération insère, dans un flux multimédia, des données additionnelles destinées à être traitées de manière synchronisée avec la restitution de la partie du flux correspondante.

Par exemple, dans le cas d'un flux HBBTV, ces données additionnelles correspondent à une application interactive, identifiable par une table AIT portée par le flux qui contient les informations de chargement et d'exécution de cette application interactive.

Dans un second temps, le procédé de génération du flux multimédia insère, dans le flux multimédia, un indicateur permettant au dispositif de restitution du flux de détecter que les données additionnelles sont destinées à un dispositif d'exécution distinct du dispositif de restitution du flux.

Par exemple, dans le cas d'un flux HBBTV, cet indicateur correspond à un descripteur de la table AIT, indiquant sur quel dispositif l'application interactive est destinée à être exécutée.

Enfin, le procédé de génération transmet le flux multimédia à au moins un dispositif de restitution, conçu pour, suite à la détection de l'information de destination, transmettre les données additionnelles à un dispositif d'exécution destinataire, selon les différents modes de réalisation particuliers de l'invention.

On présente finalement, en relation avec les figures 4a à 4c respectivement, la structure simplifiée d'un dispositif de restitution, la structure simplifiée d'un dispositif d'exécution et la structure simplifiée d'un dispositif de génération, selon un mode de réalisation particulier de l'invention.

Comme illustré en figure 4a, un tel dispositif de restitution comprend une mémoire 2000 comprenant une mémoire tampon, une unité de traitement 2001, équipée par exemple d'un microprocesseur µP et pilotée par le programme d'ordinateur 2002, mettant en oeuvre le procédé de synchronisation selon l'invention.

A l'initialisation, les instructions de code du programme d'ordinateur 2002 sont par exemple chargées dans une mémoire RAM avant d'être exécutées par le processeur de l'unité de traitement 2001. L'unité de traitement 2001 reçoit en entrée un flux multimédia. Le microprocesseur de l'unité de traitement 2001 met en oeuvre les étapes du procédé de synchronisation décrit précédemment, selon les instructions du programme d'ordinateur 2002, pour synchroniser la restitution d'un élément du flux multimédia avec l'exécution du traitement, sur un dispositif distinct, de données additionnelles synchronisées avec le flux. Pour cela, le dispositif de restitution comprend en outre : un module de réception du flux multimédia, le flux multimédia comprenant des données additionnelles synchronisées avec un élément multimédia contenu dans le flux multimédia, un module de détection, dans le flux multimédia, d'au moins une information de destination indiquant que les données additionnelles sont destinées à au moins un dispositif d'exécution distinct du dispositif de restitution, un module d'extraction de l'élément multimédia et des données additionnelles du flux multimédia, un module de transmission des données additionnelles au dispositif d'exécution, la transmission déclenchant une exécution, par une application logicielle du dispositif d'exécution, d'une opération de traitement des données additionnelles transmises, et un module de restitution de l'élément multimédia.

Ces modules sont pilotés par le microprocesseur de l'unité de traitement 2001.

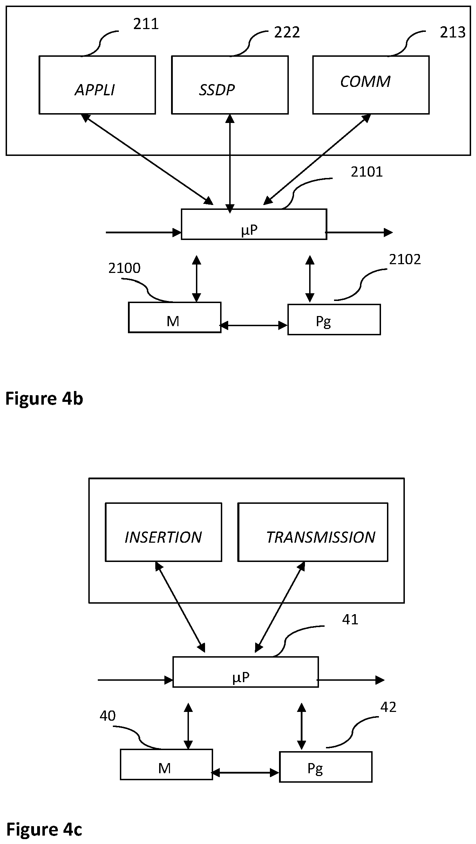

Comme illustré en figure 4b, un tel dispositif d'exécution comprend quant à lui une mémoire 2100 comprenant une mémoire tampon, une unité de traitement 2101, équipée par exemple d'un microprocesseur µP, et pilotée par le programme d'ordinateur 2102, mettant en oeuvre le procédé de synchronisation selon l'invention.

A l'initialisation, les instructions de code du programme d'ordinateur 2102 sont par exemple chargées dans une mémoire RAM avant d'être exécutées par le processeur de l'unité de traitement 2101. L'unité de traitement 2101 reçoit en entrée les données additionnelles. Le microprocesseur de l'unité de traitement 2101 met en oeuvre les étapes du procédé de synchronisation décrit précédemment, selon les instructions du programme d'ordinateur 2102. Pour cela, le dispositif d'exécution des données additionnelles comprend en outre : un module de découverte d'au moins un dispositif de restitution annoncé au sein du réseau local, un module de réception des données additionnelles en provenance du dispositif de restitution et un module d'exécution, par une application logicielle du dispositif d'exécution, d'une opération de traitement des données additionnelles reçues.

Ces modules sont pilotés par le microprocesseur de l'unité de traitement 2101.

Comme illustré en figure 4c, un tel dispositif de génération comprend une mémoire 40 comprenant une mémoire tampon, une unité de traitement 41, équipée par exemple d'un microprocesseur µP et pilotée par le programme d'ordinateur 42, mettant en oeuvre le procédé de génération selon l'invention.

A l'initialisation, les instructions de code du programme d'ordinateur 42 sont par exemple chargées dans une mémoire RAM avant d'être exécutées par le processeur de l'unité de traitement 41. L'unité de traitement 41 reçoit en entrée un flux multimédia. Le microprocesseur de l'unité de traitement 41 met en oeuvre les étapes du procédé de génération décrit précédemment, selon les instructions du programme d'ordinateur 42, pour générer un flux multimédia comprenant des données additionnelles synchronisées. Pour cela, le dispositif de génération d'un flux multimédia comprend : des moyens d'insertion, dans le flux multimédia, de données additionnelles et d'au moins une information de destination, indiquant que les données additionnelles sont destinées à au moins un dispositif d'exécution distinct d'un dispositif de restitution du flux multimédia, les dispositifs étant présents au sein d'un réseau local de communication, et des moyens de transmission du flux multimédia à au moins un dispositif de restitution du flux multimédia, conçu pour, suite à la détection de l'information de destination, transmettre les données additionnelles à un dispositif d'exécution destinataire.

Ces modules sont pilotés par le microprocesseur de l'unité de traitement 41.

## Revendications

1. Procédé de synchronisation entre une restitution d'un flux multimédia *(100)* par un dispositif de restitution et une exécution d'une opération par une application logicielle par au moins un dispositif d'exécution, lesdits dispositifs de restitution et d'exécution étant présents au sein d'un réseau local de communication, ledit procédé étant **caractérisé en ce qu'**il comprend les étapes suivantes, dans ledit dispositif de restitution :
- réception (10) dudit flux multimédia, ledit flux multimédia comprenant des données additionnelles synchronisées avec un élément multimédia (120) contenu dans ledit flux multimédia,
- détection (11), dans ledit flux multimédia, d'au moins une information de destination (1-*Dest*) indiquant que lesdites données additionnelles sont destinées à au moins un dispositif d'exécution distinct dudit dispositif de restitution, ladite information de destination étant incluse dans un descripteur privé dans une table de signalisation dudit flux multimédia, ladite détection déclenchant les étapes suivantes :
- extraction (12) dudit élément multimédia et desdites données additionnelles (110) dudit flux multimédia,
- transmission (13) desdites données additionnelles audit au moins un dispositif d'exécution, ladite transmission déclenchant une exécution, par ladite application logicielle dudit dispositif d'exécution, d'une opération de traitement desdites données additionnelles transmises,
- restitution (14) dudit élément multimédia synchronisé avec lesdites données additionnelles dans ledit flux multimédia, ladite restitution étant synchrone avec ladite opération de traitement desdites données additionnelles.

2. Procédé selon la revendication 1, **caractérisé en ce que** ledit flux multimédia est un flux de type HBBTV et que le descripteur privé est présent dans une table de signalisation AIT, pour Application Information Table, dudit flux HBBTV .

3. Procédé selon la revendication 1 ou 2, **caractérisé en ce que** lesdites données additionnelles correspondent à une application interactive à exécuter sur un dit dispositif d'exécution, l'opération de traitement desdites données additionnelles comprenant un déclenchement de l'exécution de ladite application interactive.

4. Procédé selon la revendication 1, **caractérisé en ce que** ledit procédé comprend en outre les étapes suivantes :
- détection, dans ledit flux multimédia, d'au moins un paquet de données associé auxdites données additionnelles et destiné audit au moins un dispositif d'exécution,
- extraction dudit paquet de données dudit flux multimédia,
- transmission dudit paquet de données associé auxdites données additionnelles audit au moins un dispositif d'exécution, ladite transmission déclenchant une exécution, par ladite application logicielle dudit dispositif d'exécution, d'une opération de traitement dudit paquet de données transmis.

5. Procédé selon la revendication 3, **caractérisé en ce que** ledit procédé comprend en outre les étapes suivantes :
- détection, dans ledit flux multimédia, d'au moins un paquet de données associé auxdites données additionnelles et destiné audit au moins un dispositif d'exécution,
- extraction dudit paquet de données dudit flux multimédia,
- transmission dudit paquet de données audit au moins un dispositif d'exécution, ladite transmission déclenchant une exécution, par ladite application interactive, d'une opération de traitement dudit paquet de données associé auxdites données additionnelles transmis.

6. Procédé selon les revendications 4 ou 5, **caractérisé en ce que** ledit paquet de données associé auxdites données additionnelles correspond à un événement de type « Event Stream » HBBTV.

7. Procédé selon la revendication 1 et la revendication 43, **caractérisé en ce que** lesdites étapes d'extraction correspondent à un démultiplexage desdites données additionnelles et/ou dudit paquet de données associé auxdites données additionnelles.

8. Procédé selon la revendication 1, **caractérisé en ce qu'**il comprend en outre une étape de détection, dans ledit flux multimédia, d'au moins un indicateur de fin d'exécution, par ladite application logicielle dudit dispositif d'exécution, de ladite opération de traitement desdites données additionnelles précédemment transmises audit dispositif d'exécution.

9. Procédé de génération d'un flux multimédia, **caractérisé en ce qu'**il comprend les étapes suivantes :
- insertion, dans ledit flux multimédia, de données additionnelles, synchronisées avec un élément multimédia contenu dans ledit flux multimédia,
- insertion, dans ledit flux multimédia, d'au moins une information de destination, indiquant que les données additionnelles sont destinées à au moins un dispositif d'exécution distinct d'un dispositif de restitution dudit flux multimédia, ladite information de destination étant incluse dans un descripteur privé dans une table de signalisation dudit flux multimédia, et
- transmission dudit flux multimédia à au moins un dispositif de restitution dudit flux multimédia, conçu pour, suite à la détection de ladite information de destination, transmettre lesdites données additionnelles à un dispositif d'exécution destinataire et restituer, de manière synchrone, ledit élément multimédia synchronisé avec lesdites données additionnelles dans ledit flux multimédia.

10. Programme d'ordinateur, comprenant des instructions de code de programme pour la mise en oeuvre du procédé selon au moins une des revendications 1 à 9, lorsque ledit programme est exécuté sur un ordinateur.

11. Médium de stockage lisible par ordinateur, stockant un programme d'ordinateur comprenant un jeu d'instructions exécutables par un ordinateur ou un processeur pour mettre en oeuvre le procédé selon au moins une des revendications 1 à 9.

12. Dispositif de restitution (20) d'un flux multimédia présent au sein d'un réseau local de communication, comprenant les moyens suivants :
- un module de réception dudit flux multimédia, ledit flux multimédia comprenant des données additionnelles synchronisées avec un élément multimédia contenu dans ledit flux multimédia,
- un module de détection, dans ledit flux multimédia, d'au moins une information de destination indiquant que lesdites données additionnelles sont destinées à au moins un dispositif d'exécution distinct dudit dispositif de restitution, ladite information de destination étant incluse dans un descripteur privé dans une table de signalisation dudit flux multimédia, ladite détection activant les moyens suivants :
- un module d'extraction dudit élément multimédia et desdites données additionnelles dudit flux multimédia,
- un module de transmission desdites données additionnelles audit au moins un dispositif d'exécution, ladite transmission déclenchant une exécution, par ladite application logicielle dudit dispositif d'exécution, d'une opération de traitement desdites données additionnelles transmises,
- un module de restitution dudit élément multimédia synchronisé avec lesdites données additionnelles dans ledit flux multimédia, ladite restitution étant synchrone avec ladite opération de traitement desdites données additionnelles.

13. Dispositif de génération d'un flux multimédia comprenant les moyens suivants :
- des moyens d'insertion, dans ledit flux multimédia, de données additionnelles, synchronisées avec un élément multimédia contenu dans ledit flux multimédia,
- des moyens d'insertion, dans ledit flux multimédia, d'au moins une information de destination, indiquant que les données additionnelles sont destinées à au moins un dispositif d'exécution distinct d'un dispositif de restitution dudit flux multimédia, ladite information de destination étant incluse dans un descripteur privé dans une table de signalisation dudit flux multimédia, lesdits dispositifs étant présents au sein d'un réseau local de communication, et
- des moyens de transmission dudit flux multimédia à au moins un dispositif de restitution dudit flux multimédia, conçu pour, suite à la détection de ladite information de destination, transmettre lesdites données additionnelles à un dispositif d'exécution destinataire et restituer, de manière synchrone, ledit élément multimédia synchronisé avec lesdites données additionnelles dans ledit flux multimédia.
